# EUROPEAN PATENT APPLICATION

(11) **EP 3 905 028 A1**
(43) Date of publication of application: **03.11.2021**
(21) Application number: 21169923.6
(22) Date of filing: 22.04.2021
(51) Int. Cl.: G06F 8/34

(54) **SYSTEM FOR PROVIDING SOFTWARE DEVELOPMENT ENVIRONMENT, METHOD FOR PROVIDING SOFTWARE DEVELOPMENT ENVIRONMENT, AND NON-TRANSITORY COMPUTER READABLE MEDIUM**

(30) Priority: 27.04.2020 JP 2020078537
(71) Applicant: YOKOGAWA ELECTRIC CORPORATION, Musashino-shi Tokyo 180-8750 (JP)
(72) Inventor: ABE, Koh, Musashino-shi, Tokyo, 180-8750 (JP); PALANIRAJ, Alaguraja Pandian, Musashino-shi, Tokyo, 180-8750 (JP); TABATA, Hiroki, Musashino-shi, Tokyo, 180-8750 (JP)
(74) Representative: Winter, Brandl - Partnerschaft mbB

(57) **Abstract**

A system (10) for providing a software development environment includes a display (35), an input interface (34), and a controller (31). The display (35) is configured to display a user interface (200) including a builder area (210) and a development component selection area (220) for displaying a plurality of development components placeable in the builder area (210). The input interface (34) is configured to receive input to superimpose a pointer (230) on a development component among the plurality of development components. When the pointer (230) is superimposed on a development component among the plurality of development components, the controller (31) is configured to display the development component on which the pointer (230) is superimposed on the display (35) in a manner providing a greater sense of perspective than other development components.

## Description

### TECHNICAL FIELD

The present disclosure relates to a system for providing a software development environment, a method for providing a software development environment, and a non-transitory computer readable medium.

### BACKGROUND

Along with advances in technology pertaining to the Internet of Things (IOT), systems have been proposed for automatic control of various devices, sensors, and the like connected to a network in plants, factories, buildings, residences, and the like. For example, various systems (engineering systems) have been constructed in plants, factories, and the like, such as a distributed control system, a manufacturing execution system (MES), a plant information management system (PIMS), and an enterprise resource planning (ERP) system.

The development of software implemented in these engineering systems, such as applications, workflow, and programs, has been achieved using an apparatus installed in a plant, such as a programmable logic controller (PLC). Patent literature (PLT) 1, for example, proposes technology that, instead of installing a software development environment on a client terminal, accesses a server from the client terminal to enable coding of programs using the software development environment on the server.

### CITATION LIST

### Patent Literature

PTL 1: US8086664B2

### SUMMARY

In the technology of PTL 1, however, the program code under development needs to be edited using an editor provided by the server. The user interface of the editor is not necessarily very convenient. Furthermore, code needs to be written directly with the editor, thus requiring specialized knowledge and experience with programming languages and the like. This technology therefore does not enable all users to develop software easily. In other words, the user interface of the software development environment has room for improvement.

It would be helpful to provide a system for providing a software development environment, a method for providing a software development environment, and a non-transitory computer readable medium that can improve the convenience of the user interface of a software development environment.

A system for providing a software development environment according to an embodiment is a system for providing a software development environment to develop software by combining a plurality of development components and includes an information processing apparatus that includes an input interface, a display, and a controller. The display is configured to display a user interface including a builder area and a development component selection area for displaying a plurality of development components placeable in the builder area, the input interface is configured to receive input to superimpose a pointer on a development component among the plurality of development components, and when the pointer is superimposed on a development component among the plurality of development components, the controller is configured to display the development component on which the pointer is superimposed on the display in a manner providing a greater sense of perspective than other development components.

According to the system for providing a software development environment in an embodiment, an environment for developing software by combining a plurality of development components is thus provided. The development component on which the pointer is superimposed in the development component selection area is also displayed in a manner providing a greater sense of perspective than the other development components. Accordingly, the user can easily recognize that a drag and drop operation or the like can be performed on the development component. In other words, the convenience of the user interface of a software development environment can be improved by the system for providing a software development environment in an embodiment.

In an embodiment, the controller may be configured to display the sense of perspective of the development component on the display by attaching a rectangular frame to the development component, among the plurality of development components displayed in the development component selection area, on which the pointer is superimposed and attaching a shadow around the rectangular frame.

According to the system for providing a software development environment in an embodiment, a rectangular frame is thus attached to the development component on which the pointer is superimposed, and a shadow is attached around the rectangular frame, to achieve a display with a sense of perspective. The user can therefore easily recognize that a drag and drop operation or the like can be performed on the development component.

In an embodiment, the controller may be configured to change a shape of the pointer that is displayed on the display when the pointer is superimposed on a development component among the plurality of development components.

According to the system for providing a software development environment in an embodiment, the pointer is thus displayed with a different shape when the pointer is superimposed on one of the development components. The user can thereby more easily recognize that a drag and drop operation or the like can be performed on the development component.

In an embodiment, the input interface may be configured to receive input to select a development component, and when the development component is selected, the controller may be configured to display a transparent display component yielded by transparent display of the selected development component on the display and move the transparent display component in correspondence with movement of the pointer.

According to the system for providing a software development environment in an embodiment, when a development component is selected, a transparent display component yielded by transparent display of the selected development component is displayed. The controller then moves the transparent display component in correspondence with movement of the pointer. The user can thereby more easily recognize that a drag and drop operation or the like can be performed on the selected development component.

In an embodiment, the controller may be configured to display the transparent display component on the display with a different display form when the pointer is located in the builder area than when the pointer is located in the development component selection area.

According to the system for providing a software development environment in an embodiment, the display form of the transparent display component is thus made to differ when the pointer is located in the builder area from when the pointer is located in the development component selection area. The user can therefore easily recognize that an operation, such as a drop operation, to move and place the selected development component at a predetermined position in the builder area can be performed.

A method for providing a software development environment according to an embodiment is a method for providing a software development environment to develop software by combining a plurality of development components and includes displaying a user interface including a builder area and a development component selection area for displaying a plurality of development components placeable in the builder area, receiving input to superimpose a pointer on a development component among the plurality of development components, and displaying, when the pointer is superimposed on a development component among the plurality of development components, the development component on which the pointer is superimposed in a manner providing a greater sense of perspective than other development components.

According to the method for providing a software development environment in an embodiment, a development component on which the pointer is superimposed in the development component selection area is thus displayed in a manner providing a greater sense of perspective than the other development components. Accordingly, the user can easily recognize that a drag and drop operation or the like can be performed on the development component. In other words, the convenience of the user interface of a software development environment can be improved by the method for providing a software development environment in an embodiment.

A non-transitory computer readable medium according to an embodiment stores a program, for providing a software development environment, that when executed by a processor causes the processor to execute operations including displaying a user interface including a builder area and a development component selection area for displaying a plurality of development components placeable in the builder area, receiving input to superimpose a pointer on a development component among the plurality of development components, and displaying, when the pointer is superimposed on a development component among the plurality of development components, the development component on which the pointer is superimposed in a manner providing a greater sense of perspective than other development components.

According to the non-transitory computer readable medium in an embodiment, which stores a program for providing a software development environment, a development component on which the pointer is superimposed in the development component selection area is thus displayed in a manner providing a greater sense of perspective than the other development components. Accordingly, the user can easily recognize that a drag and drop operation or the like can be performed on the development component. In other words, the convenience of the user interface of a software development environment can be improved by the non-transitory computer readable medium that stores a program for providing a software development environment in an embodiment.

According to the present disclosure, a system for providing a software development environment, a method for providing a software development environment, and a non-transitory computer readable medium that can improve technology related to the user interface of a software development environment can be provided.

### BRIEF DESCRIPTION OF THE DRAWINGS

In the accompanying drawings:
FIG. 1 is a functional block diagram of a system for providing a software development environment according to an embodiment of the present disclosure;
FIG. 2 is a diagram illustrating a user interface in the system for providing a software development environment according to an embodiment of the present disclosure;
FIG. 3 is a diagram illustrating development components having been placed in the user interface in the system for providing a software development environment according to an embodiment of the present disclosure;
FIG. 4 is a flowchart illustrating a method for providing a software development environment according to an embodiment of the present disclosure;
FIG. 5 is a diagram illustrating an overview of operations in the method for providing a software development environment according to an embodiment of the present disclosure;
FIG. 6 is a diagram illustrating an overview of operations in the method for providing a software development environment according to an embodiment of the present disclosure;
FIG. 7 is a diagram illustrating an overview of operations in the method for providing a software development environment according to an embodiment of the present disclosure;
FIG. 8 is a diagram illustrating an overview of operations in the method for providing a software development environment according to an embodiment of the present disclosure; and
FIG. 9 is a diagram illustrating an overview of operations in the method for providing a software development environment according to an embodiment of the present disclosure.

### DETAILED DESCRIPTION

A system 10 for providing a software development environment according to an embodiment of the present disclosure is described below with reference to the drawings.

Identical or equivalent portions in the drawings are labeled with the same reference signs. In the explanation of the present embodiment, a description of identical or equivalent portions is omitted or simplified as appropriate.

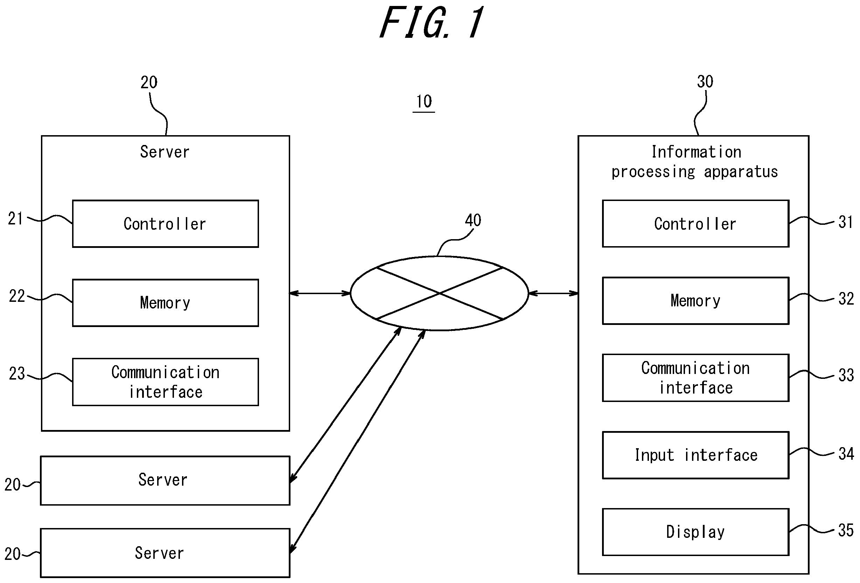

An overview and configuration of the system 10 for providing a software development environment according to the present embodiment are described with reference to FIGS. 1 to 3.

The system 10 for providing a software development environment according to the present embodiment includes a plurality of servers 20 and an information processing apparatus 30. The servers 20 and the information processing apparatus 30 are communicably connected to a network 40, such as a mobile communication network and/or the Internet. Each server 20 is, for example, installed in a data center or the like. Each server 20 is, for example, a server belonging to a cloud computing system or another computing system. In overview, the system 10 for providing a software development environment provides a user with an environment, for example on the cloud, for developing software by combining a plurality of development components. The user operates the information processing apparatus 30 to access the cloud, which is formed by the plurality of servers 20, using a web browser on the information processing apparatus 30, for example. The user can then develop software by combining a plurality of development components on an interface displayed by the web browser. The system 10 for providing a software development environment in FIG. 1 includes three servers 20, but this example is not limiting. The system 10 for providing a software development environment may include fewer than three servers 20 or may include four or more servers 20. The number of servers 20 may also be one.

The configurations of the server 20 and the information processing apparatus 30 according to the present embodiment are described below.

As illustrated in FIG. 1, the server 20 includes a controller 21, a memory 22, and a communication interface 23.

The controller 21 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit may, for example, be a field-programmable gate array (FPGA) or an application specific integrated circuit (ASIC). The controller 21 executes processing related to operation of the information processing apparatus 30 while controlling each component of the server 20.

The memory 22 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 22 functions as, for example, a main memory, an auxiliary memory, or a cache memory. The memory 22 stores data to be used for operation of the server 20 and data resulting from operation of the server 20.

The communication interface 23 includes at least one interface for communication with an external destination. The interface for communication may be an interface for wired communication or wireless communication. In the case of wired communication, the interface for communication may be a local area network (LAN) interface or a universal serial bus (USB), for example. In the case of wireless communication, the interface for communication may be an interface conforming to a mobile communication standard, such as Long Term Evolution (LTE), 4th Generation (4G), or 5th Generation (5G), or an interface conforming to short-range wireless communication such as Bluetooth® (Bluetooth is a registered trademark in Japan, other countries, or both). The communication interface 23 receives data for use in operation of the server 20 and transmits data resulting from operation of the server 20.

The functions of the server 20 are implemented by a processor corresponding to the controller 21 executing a program according to the present embodiment. In other words, the functions of the server 20 are implemented by software. The program causes a computer to function as the server 20 by causing the computer to execute the operations of the server 20. In other words, the computer functions as the server 20 by executing the operations of the server 20 in accordance with the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory. The program is, for example, distributed by the sale, transfer, or lending of a portable recording medium such as a digital versatile disk (DVD) or a compact disk read only memory (CD-ROM) on which the program is recorded. The program may also be distributed by storing the program in the storage of an external server and transmitting the program from the external server to another computer. The program may also be provided as a program product.

A portion or all of the functions of the server 20 may be implemented by a dedicated circuit corresponding to the controller 21. In other words, a portion or all of the functions of the server 20 may be implemented by hardware.

The information processing apparatus 30 includes a controller 31, a memory 32, a communication interface 33, an input interface 34, and a display 35.

The controller 31 includes at least one processor, at least one dedicated circuit, or a combination thereof. The processor may be a general-purpose processor, such as a CPU or GPU, or a dedicated processor specialized for particular processing. The dedicated circuit is, for example, an FPGA or an ASIC. The controller 31 executes processing related to operation of the information processing apparatus 30 while controlling each component of the information processing apparatus 30.

The memory 32 includes at least one semiconductor memory, at least one magnetic memory, at least one optical memory, or a combination of at least two of these. The semiconductor memory is, for example, RAM or ROM. The RAM is, for example, SRAM or DRAM. The ROM is, for example, EEPROM. The memory 32 functions as, for example, a main memory, an auxiliary memory, or a cache memory. The memory 32 stores data to be used for operation of the information processing apparatus 30 and data resulting from operation of the information processing apparatus 30.

The communication interface 33 includes at least one interface for communication with an external destination. The interface for communication may be an interface for wired communication or wireless communication. In the case of wired communication, the interface for communication may be a LAN interface or a USB, for example. In the case of wireless communication, the interface for communication may be an interface conforming to a mobile communication standard, such as LTE, 4G, or 5G, or an interface conforming to short-range wireless communication such as Bluetooth®. The communication interface 33 receives data for use in operation of the information processing apparatus 30 and transmits data resulting from operation of the information processing apparatus 30.

The input interface 34 includes at least one interface for input. The interface for input is, for example, a physical key, a capacitive key, a pointing device, or a touchscreen integrally provided with a display. The input interface 34 receives an operation for inputting data used in operation of the information processing apparatus 30. Instead of being provided in the information processing apparatus 30, the input interface 34 may be connected to the information processing apparatus 30 as an external input device. Any appropriate connection method can be used, such as USB, High-Definition Multimedia Interface (HDMI®) (HDMI is a registered trademark in Japan, other countries, or both), or Bluetooth®.

The display 35 includes at least one interface for display output. The interface for output is, for example, a display. The display may, for example, be a liquid crystal display (LCD) or an organic electro luminescence (EL) display. The display 35 outputs data resulting from operation of the information processing apparatus 30 by displaying the data. Instead of being provided in the information processing apparatus 30, the display 35 may be connected to the information processing apparatus 30 as an external output device. Any appropriate connection method can be used, such as USB, HDMI®, or Bluetooth®.

The functions of the information processing apparatus 30 are implemented by a processor corresponding to the controller 31 executing a program according to the present embodiment. In other words, the functions of the information processing apparatus 30 are implemented by software. The program causes a computer to function as the information processing apparatus 30 by causing the computer to execute the operations of the information processing apparatus 30. In other words, the computer functions as the information processing apparatus 30 by executing the operations of the information processing apparatus 30 in accordance with the program.

The computer in the present embodiment temporarily stores, in the main memory, the program recorded on a portable recording medium or transferred from a server, for example. The computer uses a processor to read the program stored in the main memory and executes processing with the processor in accordance with the read program. The computer may read the program directly from the portable recording medium and execute processing in accordance with the program. Each time the program is received from an external server, the computer may sequentially execute processing in accordance with the received program. Processing may be executed by an application service provider (ASP) type of service that implements functions only via execution instructions and result acquisition, without transmission of the program from an external server to the computer. Examples of the program include an equivalent to the program represented as information provided for processing by an electronic computer. For example, data that is not a direct command for a computer but that has the property of specifying processing by the computer corresponds to the "equivalent to the program".

A portion or all of the functions of the information processing apparatus 30 may be implemented by a dedicated circuit corresponding to the controller 31. In other words, a portion or all of the functions of the information processing apparatus 30 may be implemented by hardware.

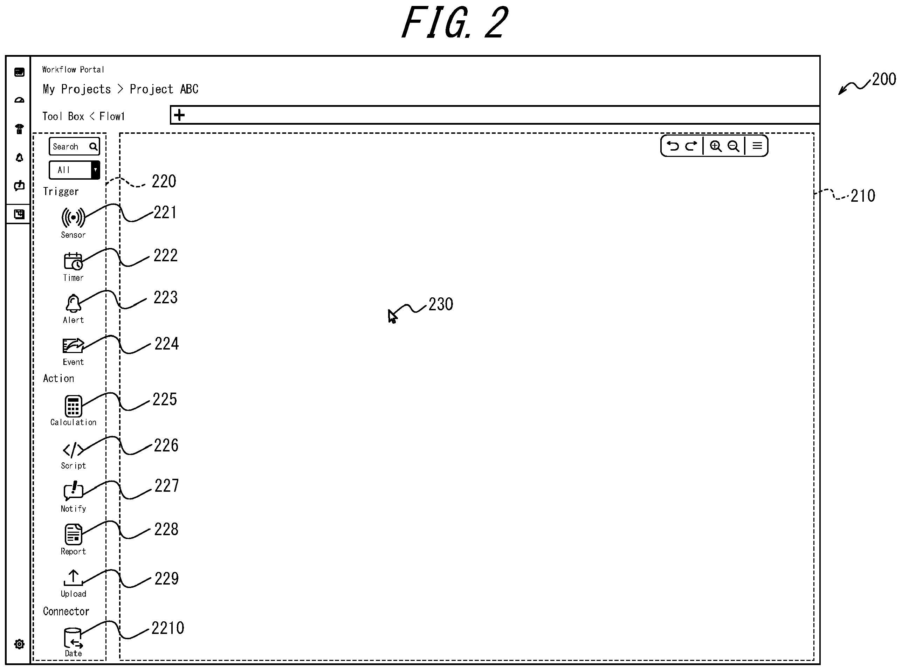

FIG. 2 illustrates an example of a user interface displayed on the display 35 of the information processing apparatus 30. The user operates the input interface 34 of the information processing apparatus 30 to access the server 20 via a web browser, for example. The user then develops software by combining a plurality of development components on the user interface displayed in the web browser. It is thus not necessary in the present embodiment to install an application or the like, on the information processing apparatus 30, that is specialized for the system 10 for providing a software development environment. In other words, as long as the information processing apparatus 30 includes a web browser application, the user can develop software by connecting to the server 20 from the information processing apparatus 30.

The user interface 200 illustrated in FIG. 2 includes a builder area 210 and a development component selection area 220. The builder area 210 is an area for a plurality of development components to be placed, connected, and the like. In other words, the user develops software by combining a plurality of development components in the builder area 210. The development component selection area 220 is an area for displaying a plurality of development components 221 to 230 placeable in the builder area 210.

The development components in the present embodiment are classified into types such as trigger, action, connector, and logic. The development components 221 to 224 illustrated in FIG. 2 are classified as triggers. The development components classified as triggers are components pertaining to the occurrence of some sort of event, such as the acquisition of a sensor value from a temperature sensor, humidity sensor, pressure sensor, or the like, the elapse of a predetermined length of time, or the occurrence of a predetermined alarm on a device. The development components 225 to 229 are classified as actions. The development components classified as actions are components pertaining to an operation, processing, or the like, such as calculation processing, notification, or uploading of data, that is performed when an event occurs. The development component 2210 illustrated in FIG. 2 is classified as a connector. The development components classified as connectors are components pertaining to information processing with an external resource, such as connection to a database, device, or the like and the addition, updating, deletion, etc. of information thereon. The development components classified as logic are components pertaining to the logical sum, filtering, or the like of input information. The user manipulates a pointer 230 using a mouse or the like to develop software on the user interface 200. For example, the user manipulates the pointer 230 to select a desired development component from the development component selection area 220 and then places, connects, etc. the selected, desired development component in the builder area 210.

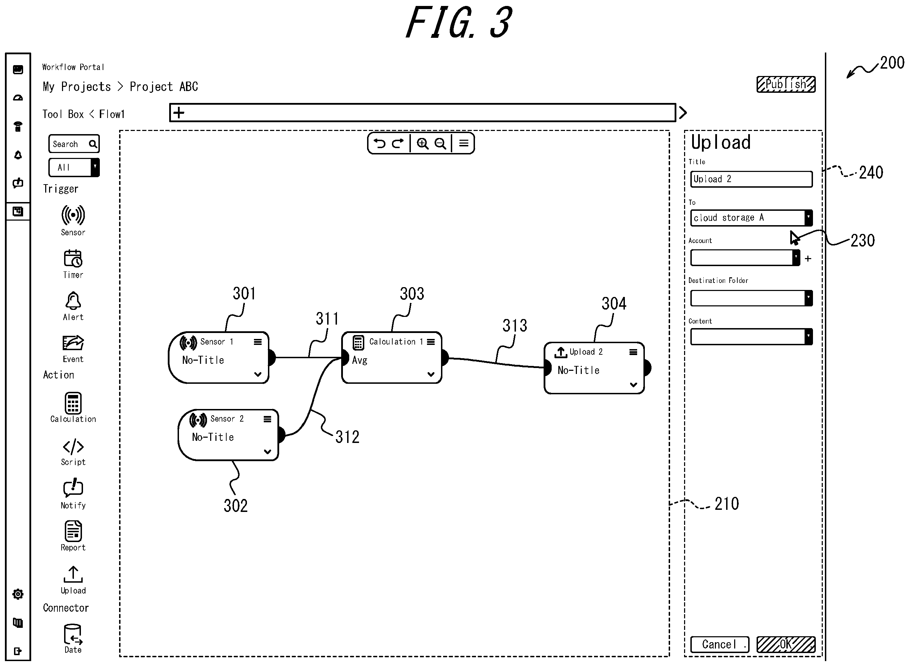

FIG. 3 is an example of a user interface displayed when a plurality of development components has been placed and connected in the builder area 210. The user interface 200 illustrated in FIG. 3 displays software for performing a predetermined calculation (here, for example, the calculation of an average) on sensor values acquired from two sensors and uploading the calculation result. The software is constructed by a plurality of development components 301 to 304. The plurality of development components 301 to 304 illustrated in FIG. 3 is connected by connectors 311 to 313. The connector 311 indicates that the output of the development component 301 is the input of the development component 303. The connector 312 indicates that the output of the development component 302 is the input of the development component 303. The connector 313 indicates that the output of the development component 303 is the input of the development component 304. As illustrated in FIG. 3, the user interface 200 in FIG. 3 includes a property area 240 at a position adjacent to the builder area 210. The property area 240 is an area displaying setting information and the like pertaining to a development component selected in the builder area 210. By selecting and setting various types of variables, conditional expressions, and so forth from pull-down menus or the like in the property area 240, the user defines various actions and the like pertaining to each development component. Use of the user interface 200 enables the user to develop software by placing and connecting development components and setting properties, with no need whatsoever for writing program code.

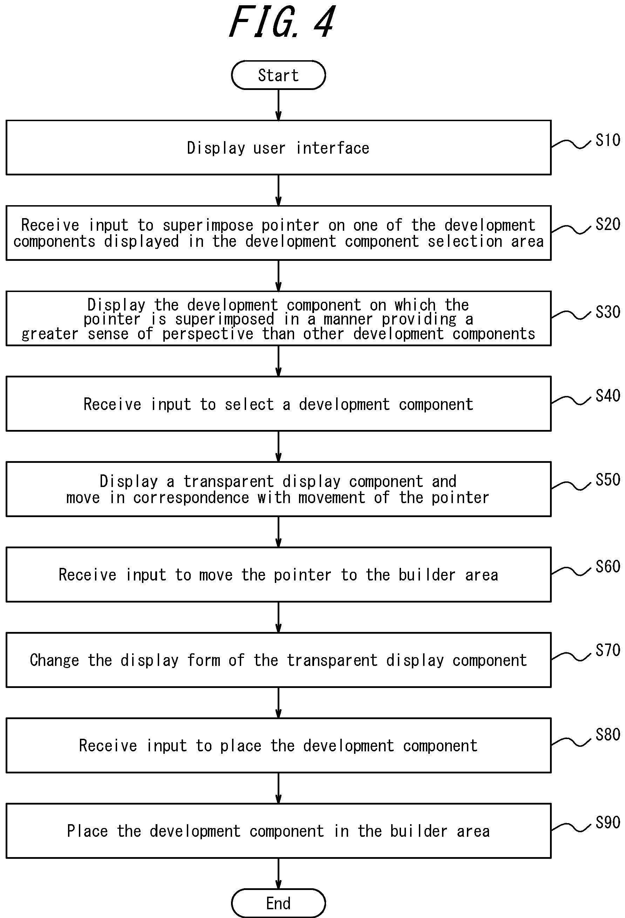

As described above, the user manipulates the pointer 230 for development on the user interface 200. For example, the user manipulates the pointer 230 with the mouse or the like to select a desired development component from the development component selection area 220 and then places the development component in the builder area 210. An example of operation of the system 10 for providing a software development environment of the present embodiment is described below for the case of the pointer 230 being manipulated with the mouse. FIG. 4 is a flowchart illustrating operations by the system 10 for providing a software development environment, i.e. an example of a method for providing a software development environment. Here, an example of the user performing a drag and drop operation with the mouse to select and place a desired development component is described.

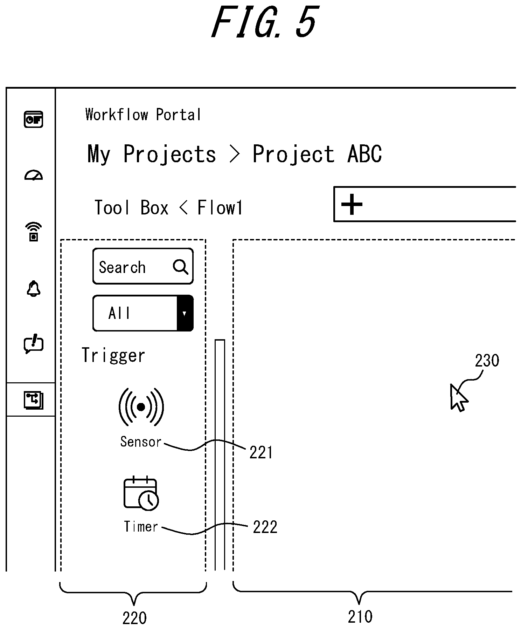

First, the controller 31 of the information processing apparatus 30 displays the user interface 200 on the display 35 (step S10). FIG. 5 is an example of the displayed user interface 200. As described above, the user interface 200 includes the builder area 210 and the development component selection area 220, which displays a plurality of development components placeable in the builder area 210. A request to display the user interface 200 is based on an input operation from the user. For example, the controller 31 receives an input operation by the user on the web browser using the input interface 34. Upon receiving the input operation, the controller 31 communicates with the server 20 via the communication interface 33 and receives data pertaining to the user interface 200. The controller 31 then displays the user interface 200 on the display 35 based on the data. An authentication process or the like pertaining to the user may be performed by the server 20 and the information processing apparatus 30 as appropriate.

Subsequently, the input interface 34 receives input to superimpose the pointer 230 on any of the plurality of development components 221 to 230 displayed in the development component selection area 220 (step S20).

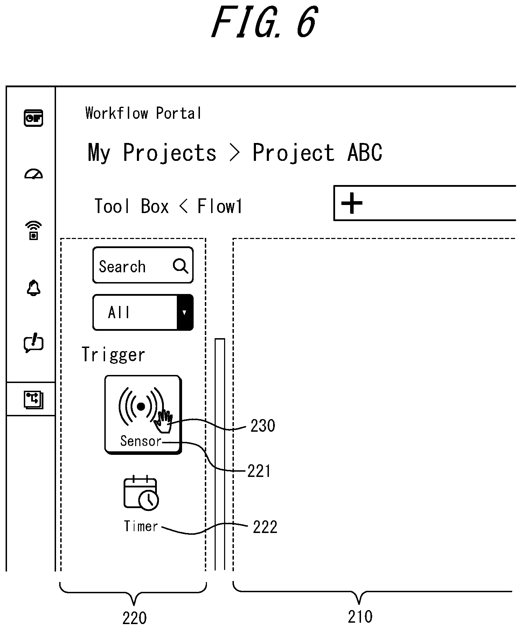

When the above-described input to superimpose the pointer 230 is provided, the controller 31 displays the development component, on which the pointer 230 is superimposed, on the display 35 in a manner providing a greater sense of perspective than other development components (step S30). FIG. 6 illustrates an overview of these operations. In FIG. 6, the pointer 230 is displayed as superimposed on the development component 221. Accordingly, the development component 221 is displayed in a manner providing a greater sense of perspective than the other development components (such as the development component 222). The development component 221 on which the pointer 230 is superimposed is displayed in a manner providing a sense of perspective and therefore appears to be hovering.

In FIG. 6, the development component 221 on which the pointer 230 is superimposed is displayed in a manner providing a sense of perspective by having a rectangular frame attached thereto and further having a shadow attached around the rectangular frame. In greater detail, a shadow is attached to the bottom and right sides of the rectangular frame so that the development component 221 is displayed by the display 35 in a manner providing a sense of perspective.

When the pointer 230 is superimposed on one of the development components, the display form of the pointer 230 changes to a display form in the shape of an open hand, as illustrated in FIG. 6. This change in display pertaining to the pointer 230 enables the user to more easily recognize that a drag and drop operation or the like can be performed on the development component on which the pointer 230 is superimposed.

Subsequently, the input interface 34 receives input to select a development component (step S40). The input to select a development component is, for example, a drag operation by the user using the mouse. The drag operation using the mouse includes an operation to press a button of the mouse and an operation to start movement of the pointer 230 using the mouse.

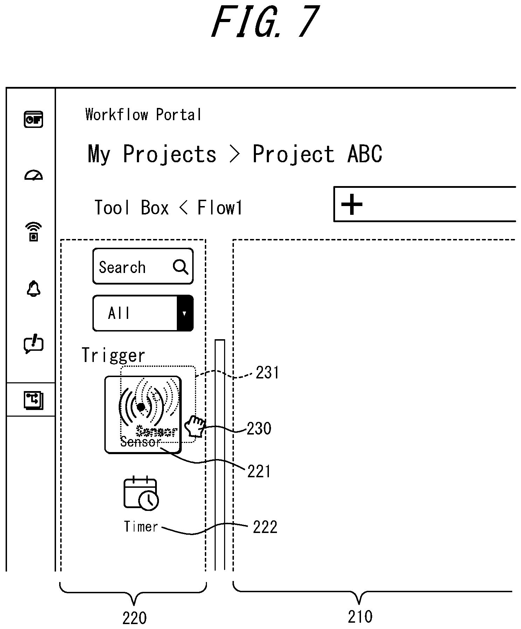

When input to select a development component is received, the controller 31 displays a transparent display component yielded by transparent display of the selected development component on the display 35 and moves the transparent display component in correspondence with movement of the pointer 230 (step S50). FIG. 7 illustrates an overview of these operations. As illustrated in FIG. 7, a transparent display component 231 is displayed in correspondence with the selected development component 221. Furthermore, the display of the transparent display component 231 moves in correspondence with movement of the pointer 230. In other words, the display of the transparent display component 231 moves in accordance with the drag operation by the user. As illustrated in FIG. 7, the pointer 230 changes to a display form in the shape of a closed hand.

Subsequently, the input interface 34 receives input to move the pointer 230 to the builder area 210 (step S60). In other words, by movement of the pointer 230, the input interface 34 receives input to move the transparent display component to the builder area 210.

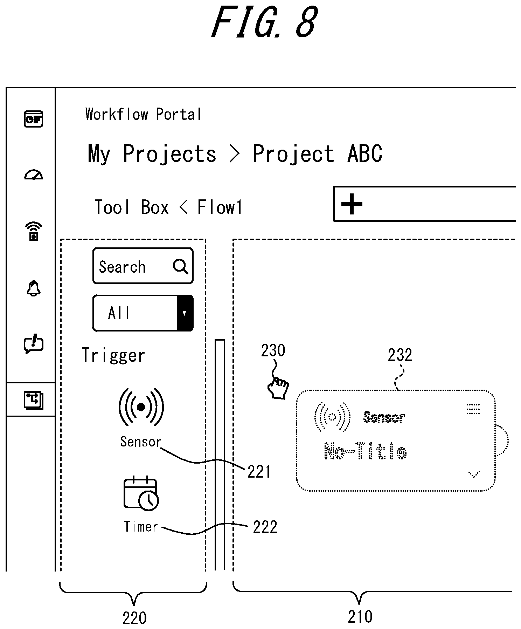

When input to move the above-described pointer 230 is received, the controller 31 changes the display form of the transparent display component displayed on the display 35 (step S70). FIG. 8 illustrates an overview of these operations. As illustrated in FIG. 8, the display form of the transparent display component 232 is changed from the display form of the transparent display component 231 in FIG. 7, for example. The display form is changed in FIG. 8 to a display form with the same shape as the development component placed in the builder area 210, but with a transparent display.

Subsequently, the input interface 34 receives input to place the development component (step S80). The input to place the development component is, for example, a drop operation by the user using the mouse. The drop operation using the mouse is an operation to release a mouse button.

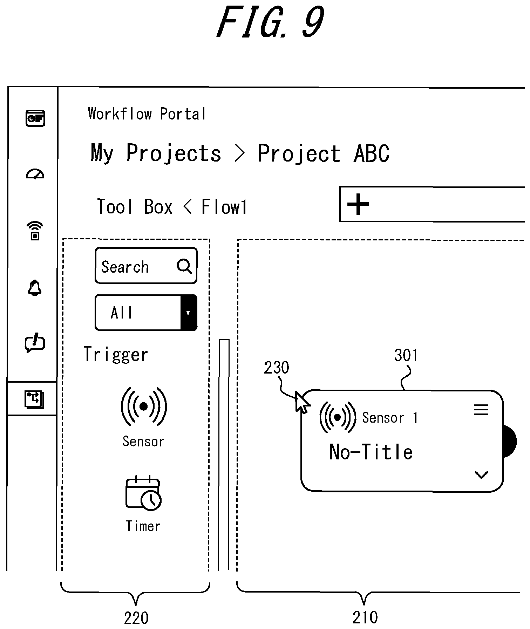

When input to place the development component is received, the controller 31 places the development component in the builder area 210 (step S90). FIG. 9 illustrates an overview of these operations. As illustrated in FIG. 9, a development component 301 corresponding to the transparent display component 232 is placed in the builder area 210. The display form of the pointer 230 then returns to an arrow shape, as illustrated in FIG. 9.

According to the system 10 for providing a software development environment of the present embodiment, a development component on which the pointer 230 is superimposed in the development component selection area 220 is thus displayed in a manner providing a greater sense of perspective than the other development components. Accordingly, the user can easily recognize that a drag and drop operation or the like can be performed on the development component. In other words, the convenience of the user interface of a software development environment can be improved by the system 10 for providing a software development environment of the present embodiment.

Furthermore, according to the system 10 for providing a software development environment of the present embodiment, the development component 221 on which the pointer 230 is superimposed is displayed in a manner providing a greater sense of perspective by having a rectangular frame attached thereto and a shadow attached around the rectangular frame, as illustrated in FIG. 6. The user can therefore easily recognize that a drag and drop operation or the like can be performed on the development component.

According to the system 10 for providing a software development environment of the present embodiment, when the pointer 230 is superimposed on one of the development components, the display form of the pointer 230 changes to a pointer like an open hand, as illustrated in FIG. 6. Therefore, the system 10 for providing a software development environment of the present embodiment enables the user to more easily recognize that a drag and drop operation or the like can be performed on the development component on which the pointer 230 is superimposed.

According to the system 10 for providing a software development environment of the present embodiment, the transparent display component 231 yielded by transparent display of the selected development component 221 is displayed, and the transparent display component 231 is moved in correspondence with movement of the pointer 230, as illustrated in FIG. 7. The user can therefore easily identify the selected development component 221 and easily recognize that a drag and drop operation or the like can be performed on the selected development component 221.

According to the system 10 for providing a software development environment of the present embodiment, when the pointer 230 is located in the builder area 210, the display form of the transparent display component 232 differs from when the pointer 230 is located in the development component selection area 220, as illustrated in FIG. 8. The user can therefore easily recognize that an operation, such as a drop operation, to move and place the selected development component at a predetermined position in the builder area 210 can be performed.

Although the present disclosure is based on embodiments and drawings, it is to be noted that various changes and modifications will be apparent to those skilled in the art based on the present disclosure. Therefore, such changes and modifications are to be understood as included within the scope of the present disclosure. For example, the functions and the like included in the components, steps, and the like may be reordered in any logically consistent way. Furthermore, components, steps, and the like may be combined into one or divided.

For example, the development component 221 having the pointer 230 superimposed thereon has been described as being displayed in a manner providing a greater sense of perspective by having a rectangular frame attached thereto and a shadow attached to the bottom and side of the rectangular frame, but this example is not limiting. For example, a shadow may be attached to only the bottom or only the side of the rectangular frame. A shadow may, for example, be attached to at least one of the other sides of the rectangular frame. The shape of the frame attached to the development component 221 may be any shape, such as a circle, an oval, or a polygon other than a rectangle. In this case, the position of the shadow attached to the frame may be any appropriate location. Furthermore, the development component 221 may be displayed by any display form, other than attachment of a frame and a shadow, that provides a sense of perspective.

In the present embodiment, the pointer 230 is manipulated by a mouse in FIGS. 4 to 9, but this example is not limiting. For example, the pointer 230 may be manipulated by a physical key, a capacitive key, a pointing device other than a mouse, a touchscreen provided integrally with a display, or the like.

The information processing apparatus 30 has been described as accessing the server 20 via a web browser in the present embodiment to provide the user with a software development environment, but this example is not limiting. For example, an application according to the system 10 for providing a software development environment may be installed on the information processing apparatus 30, and a software development environment may be provided to the user by communication with the server 20 via the application.

## Claims

1. A system (10) for providing a software development environment to develop software by combining a plurality of development components, the system comprising an information processing apparatus (30) that includes an input interface (34), a display (35), and a controller (31), wherein
the display (35) is configured to display a user interface (200) including a builder area (210) and a development component selection area (220) for displaying a plurality of development components placeable in the builder area (210),
the input interface (34) is configured to receive input to superimpose a pointer on a development component among the plurality of development components, and
when the pointer is superimposed on a development component among the plurality of development components, the controller (31) is configured to display the development component on which the pointer is superimposed on the display (35) in a manner providing a greater sense of perspective than other development components.

2. The system (10) for providing a software development environment of claim 1, wherein the controller (31) is configured to display the sense of perspective of the development component on the display (35) by attaching a rectangular frame to the development component, among the plurality of development components displayed in the development component selection area (220), on which the pointer is superimposed and attaching a shadow around the rectangular frame.

3. The system (10) for providing a software development environment of claim 1 or 2, wherein the controller (31) is configured to change a shape of the pointer that is displayed on the display (35) when the pointer is superimposed on a development component among the plurality of development components.

4. The system (10) for providing a software development environment of any one of claims 1 to 3, wherein
the input interface (34) is configured to receive input to select a development component, and
when the development component is selected, the controller (31) is configured to display a transparent display component yielded by transparent display of the selected development component on the display (35) and move the transparent display component in correspondence with movement of the pointer.

5. The system (10) for providing a software development environment of claim 4, wherein the controller (31) is configured to display the transparent display component on the display (35) with a different display form when the pointer is located in the builder area (210) than when the pointer is located in the development component selection area (220).

6. A method for providing a software development environment to develop software by combining a plurality of development components, the method comprising:
displaying a user interface (200) including a builder area (210) and a development component selection area (220) for displaying a plurality of development components placeable in the builder area (210);
receiving input to superimpose a pointer on a development component among the plurality of development components; and
displaying, when the pointer is superimposed on a development component among the plurality of development components, the development component on which the pointer is superimposed in a manner providing a greater sense of perspective than other development components.

7. The method for providing a software development environment of claim 6, further comprising displaying the sense of perspective of the development component by attaching a rectangular frame to a development component, among the plurality of development components displayed in the development component selection area (220), on which the pointer is superimposed and attaching a shadow around the rectangular frame.

8. The method for providing a software development environment of claim 6 or 7, further comprising changing a shape of the pointer that is displayed when the pointer is superimposed on a development component among the plurality of development components.

9. The method for providing a software development environment of any one of claims 6 to 8, further comprising:
receiving input to select a development component; and
displaying, when the development component is selected, a transparent display component yielded by transparent display of the selected development component and moving the transparent display component in correspondence with movement of the pointer.

10. The method for providing a software development environment of claim 9, further comprising displaying the transparent display component with a different display form when the pointer is located in the builder area (210) than when the pointer is located in the development component selection area (220).

11. A non-transitory computer readable medium storing a program, for providing a software development environment, that when executed by a processor causes the processor to execute operations comprising:
displaying a user interface (200) including a builder area (210) and a development component selection area (220) for displaying a plurality of development components placeable in the builder area (210);
receiving input to superimpose a pointer on a development component among the plurality of development components; and
displaying, when the pointer is superimposed on a development component among the plurality of development components, the development component on which the pointer is superimposed in a manner providing a greater sense of perspective than other development components.

12. The non-transitory computer readable medium of claim 11, wherein the program for providing a software development environment causes the processor to execute operations further comprising displaying the sense of perspective of the development component by attaching a rectangular frame to a development component, among the plurality of development components displayed in the development component selection area (220), on which the pointer is superimposed and attaching a shadow around the rectangular frame.

13. The non-transitory computer readable medium of claim 11 or 12, wherein the program for providing a software development environment causes the processor to execute operations further comprising changing a shape of the pointer that is displayed when the pointer is superimposed on a development component among the plurality of development components.

14. The non-transitory computer readable medium of any one of claims 11 to 13, wherein the program for providing a software development environment causes the processor to execute operations further comprising:
receiving input to select a development component; and
displaying, when the development component is selected, a transparent display component yielded by transparent display of the selected development component and moving the transparent display component in correspondence with movement of the pointer.

15. The non-transitory computer readable medium of claim 14, wherein the program for providing a software development environment causes the processor to execute operations further comprising displaying the transparent display component with a different display form when the pointer is located in the builder area (210) than when the pointer is located in the development component selection area (220).
